# EUROPÄISCHE PATENTSCHRIFT

(11) **EP 3 417 245 B1**
(45) Veröffentlichungstag und Bekanntmachung des Hinweises auf die Patenterteilung: **12.05.2021**
(21) Anmeldenummer: 17705844.3
(22) Anmeldetag: 14.02.2017
(51) Int. Cl.: G01D 5/22, G01B 7/00, G01D 5/20

(54) **SENSOR**
SENSOR
CAPTEUR

(30) Priorität: 17.02.2016 DE 102016202402
(43) Veröffentlichungstag der Anmeldung: 26.12.2018
(73) Patentinhaber: Continental Teves AG & Co. OHG, 60488 Frankfurt am Main (DE)
(72) Erfinder: ACKER, Heinrich, 65824 Schwalbach (DE)
(74) Vertreter: Continental Corporation
(86) Internationale Anmeldenummer: PCT/EP2017/053292
(87) Internationale Veröffentlichungsnummer: WO 2017/140677

(56) Entgegenhaltungen:
- EP-A2- 0 337 939
- WO-A1-2015/129229
- DE-A1- 4 311 973
- DE-A1- 19 812 965
- DE-A1-102005 007 731

## Beschreibung

Die Erfindung betrifft einen Sensor nach Anspruch 1. Dieser Sensor kann beispielsweise zum Erfassen eines Wegs oder einer Position eingesetzt werden.

Beispielsweise können derartige Sensoren in Automobilen eingesetzt werden, um Messgrößen wie beispielsweise die aktuelle Position eines Pedals oder eines Reglers zu erfassen.

DE 10 2005 007731 A1 beschreibt einen Positionssensor, aufweisend einen Schaltungsträger mit Messinduktivitäten, die mit einer Referenzinduktivität gekoppelt sind.

Eine induktive Sensoranordnung ist auch aus EP 0 337 939 A2 bekannt, die das Ziel verfolgt, Abstandsfehler bei der Ermittlung der Relativlage der Anordnung zu einem Objekt zu kompensieren.

DE 43 11 973 A1 betrifft eine magneto-induktive Sensorzeile mit nebeneinander und / oder übereinander angeordneten Spulen.

DE 198 12 965 A1 beschreibt eine Vorrichtung zum induktiven Messen der Lage eines Metallbandes mittels einer Sekundärspule und einer mit Wechselspannung gespeisten Primärspule.

WO 2015/129229 A1 betrifft einen Positionssensor, bei dem mittels eines Prozessors die Wahrscheinlichkeit verringert werden soll, dass Zeiträume, in denen Erregungsspulen arbeiten, einander bei Aktivierung von Detektoren überlappen.

Bekannte Sensoren sind häufig kompliziert im Aufbau und in der Verschaltung.

Es ist deshalb eine Aufgabe der Erfindung, einen Sensor bereitzustellen, welcher im Vergleich zu bekannten Sensoren alternativ, beispielsweise einfacher ausgeführt ist.

Dies wird erfindungsgemäß durch einen Sensor nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft einen Sensor. Der Sensor weist einen Schaltungsträger auf. Der Sensor weist eine Anzahl von Aufsatzinduktivitäten auf. Außerdem weist der Sensor zumindest eine Leiterplatteninduktivität auf, welche mit den Aufsatzinduktivitäten gekoppelt ist. Hierbei kann es sich insbesondere um eine magnetische Kopplung, eine elektrische Kopplung oder eine elektromagnetische bzw. elektrische und magnetischen Kopplung handeln.

Die Aufsatzinduktivitäten sind vorzugsweise in SMD-Technik auf dem Schaltungsträger aufgebracht.

Ein solcher Sensor hat sich als einfach in der Herstellung und in der Anwendung erwiesen. Er erlaubt insbesondere eine exakte Erfassung von zahlreichen Messgrößen, welche beispielsweise in einem Fahrzeug vorkommen.

Es sei verstanden, dass unter dem Begriff einer "Induktivität" hier typischerweise eine Spule in Form eines Bauelements oder einer anderen physischen Ausführung gemeint ist.

Die Kopplung zwischen Leiterplatteninduktivität und Aufsatzinduktivitäten kann insbesondere von externen Gegebenheiten, beispielsweise von einer bestimmten Messgröße abhängen. Dies erlaubt die Erfassung der Messgröße, beispielsweise derart, wie dies weiter unten näher beschrieben werden wird.

Die Leiterplatteninduktivität kann insbesondere unterhalb der Aufsatzinduktivitäten in dem Schaltungsträger ausgeführt sein. Dies erlaubt eine vorteilhafte Kopplung, insbesondere eine magnetische Kopplung. Unnötige Distanzen können auf diese Weise vermieden werden. Anders ausgedrückt können die Aufsatzinduktivitäten unmittelbar oberhalb der Leiterplatteninduktivität ausgeführt sein.

Die Leiterplatteninduktivität kann insbesondere in Form einer Anzahl von Leiterbahnen in dem Schaltungsträger ausgeführt sein. Diese können beispielsweise an der Oberfläche des Schaltungsträgers oder auch in dem Schaltungsträger eingeschlossen sein. Dies kann auch kombiniert werden. Beispielsweise können auf diese Weise zwei, drei oder mehr Ebenen verwendet werden, wobei jede Ebene eine Anzahl oder Mehrzahl von Leiterbahnen aufweist. Es kann jedoch auch nur eine Ebene verwendet werden.

Insbesondere hat es sich als vorteilhaft erwiesen, in jeder Ebene so viele Leiterbahnen unter der Aufsatzinduktivität hindurchzuführen, wie es die gewählte Schaltungsträgertechnologie maximal zulässt. In der Anschlussebene der Aufsatzinduktivität ist der vorteilhaft nutzbare Platz typischerweise auf den Zwischenraum der Anschlüsse begrenzt; in anderen Ebenen können auch die Randbereiche der Aufsatzinduktivität vorteilhaft gequert werden.

Beispielhaft sei die Verwendung von zehn Leiterbahnen als mögliche Ausführung angeführt, wobei beispielsweise eine obere Ebene vier Leiterbahnen aufweist und eine untere Ebene sechs Leiterbahnen aufweist.

Der Sensor kann insbesondere eine Mehrzahl von Aufsatzinduktivitäten aufweisen, welche elektrisch in Reihe geschaltet sind. Dies erlaubt eine gemeinsame Auswertung aller Aufsatzinduktivitäten.

Der Sensor kann auch eine Mehrzahl von Aufsatzinduktivitäten aufweisen, welche jeweils einzeln mit einer elektronischen Steuerungseinheit verbunden sind. Dies erlaubt eine separate Auswertung der Aufsatzinduktivitäten. Dies kann insbesondere vorteilhaft im Zusammenhang mit einer weiter unten beschriebenen Verschaltung erfolgen.

Es sei angemerkt, dass unter einer Anzahl von Elementen im Rahmen dieser Anmeldung grundsätzlich ein solches Element oder mehrere solche Elemente verstanden werden, wohingegen unter einer Mehrzahl zumindest zwei solcher Elemente verstanden werden.

Bevorzugt weist der Sensor ferner einen Messkörper auf, welcher relativ zum Schaltungsträger beweglich ist. Dieser Messkörper kann insbesondere die bereits erwähnte Kopplung beeinflussen, was an den Messinduktivitäten messbar ist.

Der Messkörper kann insbesondere hinsichtlich Position und/oder Lage relativ zum Schaltungsträger beweglich sein. Dies ermöglicht die Verknüpfung des Messkörpers mit einer zu messenden Messgröße, beispielsweise der momentanen Stellung eines Pedals oder eines Reglers.

Der Messkörper kann insbesondere ferromagnetisch und/oder elektrisch leitfähig sein. Er kann also ferromagnetisch und elektrisch nicht leitfähig sein, er kann nicht ferromagnetisch und elektrisch leitfähig sein, oder er kann ferromagnetisch und elektrisch leitfähig sein. Derartige Materialien können vorteilhaft die Kopplung zwischen Leiterplatteninduktivität und Messinduktivitäten beeinflussen, was im Rahmen einer Auswertung messbar ist.

Der Messkörper kann insbesondere flächig und/oder mehrteilig ausgeführt sein. Dies ermöglicht die Anpassung an spezifische Gegebenheiten.

Gemäß einer Weiterbildung ist der Messkörper in einem elastisch verformbaren Objekt eingebettet. Dieses Objekt kann dann beispielsweise an ein anderes Element angeschlossen bzw. mit diesem in geeigneter Weise verbunden werden, so dass sich bei Änderung einer zu messenden Größe, beispielsweise der Stellung eines Pedals, das Objekt elastisch deformiert. Statt eines elastisch verformbaren Objekts kann auch ein allgemein verformbares Objekt verwendet werden. Der Messkörper bewegt sich dann entsprechend innerhalb des Objekts mit, was wie bereits erwähnt über eine Auswertung der Messinduktivitäten erfasst werden kann.

Der Sensor kann insbesondere als Positions- und/oder Kraftsensor ausgeführt sein. Dies entspricht typischen Anwendungen, für welche sich der Sensor als besonders geeignet erwiesen hat.

Die Aufsatzinduktivitäten können beispielsweise entlang eines Pfads oder eines Umfangs angeordnet sein. Dies erlaubt die Anpassung an bestimmte Messsituationen. Der Pfad kann beispielsweise ein gerader oder linearer Pfad sein. Es kann jedoch auch ein gebogener Pfad sein. Beispielsweise kann der Pfad auch einem Kreisbogensegment oder einem Segment einer Ellipse oder eines anderen geometrischen Objekts entsprechen. Beispielsweise kann der Messkörper dazu ausgebildet sein, sich entlang des Pfads zu bewegen. Dies erlaubt eine besonders vorteilhafte Erfassung der Position des Messkörpers.

Die Leiterplatteninduktivität ist gemäß einer Ausführung eine Referenzinduktivität, wobei die Aufsatzinduktivitäten jeweilige Messinduktivitäten sind. Gemäß einer hierzu alternativen Ausführung ist zumindest eine der Aufsatzinduktivitäten eine Referenzinduktivität und die Leiterplatteninduktivität ist eine Messinduktivität.

Unter einer Referenzinduktivität wird insbesondere eine Induktivität verstanden, welche durch eine Schaltung angeregt wird und ein Magnetfeld erzeugt, welches dann die Messinduktivitäten durchdringt und in diesen ein messbares Signal induziert. Dementsprechend werden unter Messinduktivitäten insbesondere solche Induktivitäten verstanden, welche zum Erfassen bzw. Messen eines solchen Magnetfelds oder eines anderen entsprechenden Signals dienen.

Die Messinduktivitäten können insbesondere seriell und/oder parallel elektrisch verschaltet sein. Dabei kann auf beliebige Variationen zurückgegriffen werden. So können beispielsweise einige der Messinduktivitäten seriell verschaltet sein, andere können parallel verschaltet sein. Durch eine serielle Verschaltung oder durch eine parallele Verschaltung können einzelne bzw. mehrere Messinduktivitäten zusammen ausgewertet werden. Dies erlaubt beispielsweise eine schnellere Erfassung oder die Nutzung bestimmter Effekte.

Bevorzugt erzeugt die Referenzinduktivität bei durchfließendem Strom ein Magnetfeld, welches die Messinduktivitäten durchdringt und welches vorzugsweise von dem Messkörper abhängig von der Position und/oder der Lage des Messkörpers verändert wird. Dies erlaubt das bereits weiter oben skizzierte Messprinzip, welches auf der Veränderung eines Magnetfelds bzw. einer Kopplung zwischen Referenzinduktivität und Messinduktivitäten basiert. Die Referenzinduktivität kann beispielsweise auch als Koppelinduktivität bezeichnet werden, da diese typischerweise das Magnetfeld erzeugt, welches dann in die Messinduktivitäten eingekoppelt wird.

Gemäß der Erfindung weist der Sensor ferner eine Kapazität auf, welche mit der Referenzinduktivität zu einem Parallelschwingkreis verschaltet ist. Ferner weist der Sensor gemäß dieser Weiterbildung eine elektronische Steuerungseinheit auf, wobei die elektronische Steuerungseinheit direkt mit dem Parallelschwingkreis verbunden ist. Dies kann beispielsweise eine direkte leitfähige Verbindung, beispielsweise eine Verdrahtung oder die Ausführung als entsprechende Leiterbahnen, oder auch eine Verbindung mittels eines oder mehrerer Widerstände bedeuten.

Die elektronische Steuerungseinheit ist dazu konfiguriert, den Parallelschwingkreis mit einer Anregungsfrequenz oszillierend anzuregen, welche aus einem Takt der elektronischen Steuerungseinheit abgeleitet ist. Dies ermöglicht eine Anregung des Parallelschwingkreises, so dass durch die Referenzinduktivität ein Wechselstrom fließt, welcher zu einem entsprechenden magnetischen Wechselfeld führt, das zur Messung verwendet werden kann.

Die elektronische Steuerungseinheit ist des Weiteren direkt mit jeder der Messinduktivitäten verbunden und ist dazu konfiguriert, einen Wert, welcher zumindest eine Messgröße anzeigt, an der jeweiligen Messinduktivität zu messen. Bei einer solchen Messgröße kann es sich beispielsweise um die Position eines Messkörpers oder um dessen Lage handeln. Es kann sich jedoch beispielsweise auch um die Position bzw. die Stellung eines Pedals eines Kraftfahrzeugs, eines Reglers oder einer anderen auszuwertenden Größe handeln. Es kann auch davon gesprochen werden, dass der Wert durch eine solche Messgröße beeinflusst wird.

Eine solche Ausführung ermöglicht insbesondere die vorteilhafte Verwendung eines Messprinzips, welches sich ohne nennenswerten Aufwand nahezu beliebig skalieren lässt. Dies bedeutet insbesondere, dass eine Vielzahl von Messinduktivitäten verwendet werden kann und damit eine sehr hohe Auflösung und/oder ein besonders langer Messbereich erreicht werden kann, ohne dass eine komplizierte Beschaltung nötig ist. Es ist im Wesentlichen lediglich pro verwendeter Messinduktivität ein Eingang der elektronischen Steuerungseinheit sowie eine entsprechende elektrische Anbindung nötig. Die Anregungsfrequenz kann bevorzugt um maximal 25 %, bevorzugt maximal 20 %, besonders bevorzugt maximal 15 %, noch weiter bevorzugt maximal 10 % von einer Resonanzfrequenz des Parallelschwingkreises unterschiedlich sein. Dies hat sich in der Praxis als vorteilhaft erwiesen.

Die Anregungsfrequenz kann insbesondere einstellbar sein, wobei sie insbesondere durch ein Element mit variabler Frequenz gesteuert werden kann.

Vorteilhaft kann zur Messung ein Lock-in-Verstärker verwendet werden.

Die erste Induktivität, die Messinduktivität und/oder die Kapazität können beispielsweise Bauteile mit einer jeweiligen Toleranz zwischen 1 % und 10 %, bevorzugt von 1 % oder von weniger als 1 % sein. Derartige Toleranzen haben sich als vorteilhaft erwiesen.

Die Messinduktivität kann beispielsweise galvanisch oder magnetisch mit der Referenzinduktivität gekoppelt sein.

Gemäß einer Weiterbildung kann der Parallelschwingkreis eine maximale Güte aufweisen, welche durch Maximierung eines Werts von Vt * Vt / V0 erhalten wird. Dabei bezeichnet Vt ein Verhältnis aus Spulenstrom und Zuleitungsstrom bei maximaler Abweichung der Kapazität und der Referenzinduktivität von ihren jeweiligen Werten bei der Resonanzfrequenz des Parallelschwingkreises. V0 bezeichnet ein Verhältnis aus Spulenstrom und Zuleitungsstrom bei jeweiligen Werten von Kapazität und Referenzinduktivität bei der Resonanzfrequenz des Parallelschwingkreises. Ein solches Vorgehen hat sich als besonders vorteilhaft für typische Anwendungen erwiesen.

Die maximale Güte kann insbesondere durch Verschalten eines Widerstands im Parallelschwingkreis begrenzt werden.

Die elektronische Steuerungseinrichtung kann insbesondere dazu ausgebildet sein, einen oder mehrere der folgenden Kennwerte über die Messinduktivitäten zu messen:
- Selbstinduktivität bzw. Induktivität,
- Verlustwiderstand,
- komplexe Impedanz,
- Verlustwinkel,
- Gegeninduktivität zur ersten Induktivität.

Vorteilhaft kann der Sensor zwei, drei oder mehr als drei Messinduktivitäten aufweisen. Beispielsweise kann er auch vier, fünf oder mehr als fünf Messinduktivitäten aufweisen. Insbesondere bei der eben erläuterten Schaltung kann besonders einfach die Anzahl der Messinduktivitäten skaliert werden.

Gemäß einer anderen Weiterbildung weist der Sensor eine Mehrzahl von Messinduktivitäten auf, wobei jede Messinduktivität einen ihr zugeordneten Magnetkern aufweist. Die Messinduktivitäten sind entlang eines Pfads angeordnet und sind des Weiteren elektrisch in Reihe geschaltet. Die Messinduktivitäten weisen dabei jeweilige Induktivitäten bzw. Induktivitätswerte auf, welche entlang des Pfads in einer Richtung ansteigen. Bei dem hier als Induktivität bezeichneten Merkmal handelt es sich um die Induktivität als elektrische Eigenschaft einer Spule.

Dies ermöglicht eine gemeinsame Auswertung aller Messinduktivitäten anhand der unterschiedlichen Werte der jeweiligen Induktivität. Auch dies ermöglicht eine einfache Skalierung auf eine Vielzahl von Induktivitäten.

Gemäß einer Ausführung sind die Messinduktivitäten dabei entlang des Pfads in Reihe geschaltet. Dies ermöglicht eine einfache Auswertung. Es sei jedoch verstanden, dass auch andere Verschaltungen möglich sind, welche sich nicht an dem Pfad orientieren.

Insbesondere kann bei einer solchen Ausführung der Messkörper entlang des Pfads bewegbar sein, wodurch eine vorteilhafte Messung dessen Position möglich ist.

Der Sensor ist dabei bevorzugt dazu ausgebildet, ein gemeinsames Ausgangssignal, insbesondere eine Gesamtinduktivität, abhängig von der Position des Messkörpers entlang des Pfads zu erzeugen.

Der Messkörper kann beispielsweise ein ferromagnetischer hochpermeabler Körper, ein elektrisch leitfähiger Körper oder auch ein Permanentmagnet sein.

Die jeweiligen Magnetkerne weisen bevorzugt keine remanente Magnetisierung auf.

Bei dem Schaltungsträger kann es sich insbesondere um eine Leiterplatte, einen Leadframe oder um einen Molded-Interconnected-Devices(MID)-Träger handeln.

Die Messinduktivitäten sind bevorzugt so nah voneinander beabstandet, dass sich bei Bewegung des Messkörpers entlang des Pfads eine Kennlinie der Gesamtinduktivität ergibt, welche zumindest über die Hälfte des Pfads, bevorzugt über zumindest drei Viertel des Pfads oder auch über den ganzen Pfad monoton steigend oder fallend ist. Dies erlaubt eine vorteilhafte Auswertung und vermeidet Zweideutigkeiten.

Der Sensor kann beispielsweise eine Führung aufweisen, welche den Messkörper führt. Eine solche Führung kann den Messkörper insbesondere entlang des erwähnten Pfads führen.

Der Sensor kann ein Betätigungsglied aufweisen, mittels welchem der Messkörper von außen bewegbar ist, beispielsweise entlang des Pfads.

Allgemein ist die Verwendung von SMD-Induktivitäten als Elemente von induktiven Sensoren vorteilhaft, weil damit vielfältige Anordnungen geschaffen werden können, in denen die Magnetfelder der Sensoren durch die SMD-Elemente anwendungsspezifisch geformt werden können, weil die Anordnung der Elemente auf einem Schaltungsträger eine billige, gut beherrschte Technologie darstellt und die Elemente selbst billig sind.

Des Weiteren ist, wie auch bereits bei einzelnen Ausführungen erwähnt, eine besonders gute Skalierbarkeit gegeben. Dies erlaubt die Verwendung besonders vieler Messinduktivitäten.

Die Mehrzahl an gemessenen Parametern kann beispielsweise dazu genutzt werden, um mehrere unabhängige Messgrößen mit einem induktiven System zu ermitteln. Das kann unter anderem vektorielle Größen einschließen, die entsprechend der Anzahl der Vektorkomponenten als mehrere Größen aufzufassen sind.

Querempfindlichkeiten des induktiven Systems können beseitigt werden, indem die zusätzlich gemessenen Größen rechnerisch aus dem Messergebnis entfernt werden, indem zum Beispiel ein Gleichungssystem mit allen Messgrößen aufgestellt und in einer Recheneinheit gelöst wird.

Auflösung und/oder Empfindlichkeit können gesteigert werden, indem verschiedene Messbereiche für die gleiche Messgröße kombiniert werden, beispielsweise durch Reihung von einzelnen Elementen zur Messbereichserweiterung oder durch Anwendung des Nonius-Prinzips.

Das beschriebene System kann beispielsweise auch als Messtransformator aufgefasst werden. Es kann beispielsweise davon gesprochen werden, dass eine Referenzinduktivität mit dem von ihr erzeugten magnetischen Fluss auf die Messinduktivitäten wirkt, wobei die Messgröße die Kopplung zwischen Primär- und Sekundärseite bestimmt.

Bei SMD-Induktivitäten kann beispielsweise eine Montage unmittelbar nebeneinander oder hintereinander auf der gleichen oder übereinander auf gegenüberliegenden Seiten eines Schaltungsträgers in Betracht kommen. Die letzte Variante weist keine Beschränkungen hinsichtlich der Entwurfsregeln auf.

Es kann auch allgemein davon gesprochen werden, dass Leiterplatteninduktivitäten und SMD-Induktivitäten kombiniert werden, so dass sie untereinander eine deutliche Flussverkettung ausbilden. Hierzu können beispielsweise SMD-Induktivitäten auf einem Schaltungsträger verlötet werden, insbesondere in herkömmlicher Weise. Unter der Induktivität queren Leiterbahnen, die zu einer Leiterplatte gehören. Die SMD-Induktivität weist dazu vorteilhaft einen offenen magnetischen Kreis auf, d.h. es sollte kein hochpermeabler Pfad für den Fluss der Induktivität gegeben sein, der nur innerhalb des Bauelements verläuft. Durch diese Anordnung werden die magnetischen Flüsse der beiden Induktivitäten effektiv miteinander verkettet, wobei der Abstand der Leiter beider Induktivitäten zum Kernmaterial der SMD-Induktivität typischerweise gering ist und die Flussverkettung durch Toleranzen des Fertigungsprozesses nur wenig beeinflusst wird.

Die beschriebene Anordnung kann auch als SMDPT (SMD-Planartransformator) bezeichnet werden. Die Flussverkettung wird dabei typischerweise weit überwiegend oder fast ausschließlich durch den Nahbereich um den hochpermeablen Kern der SMD-Induktivität bestimmt.

Ein induktives System, das sich auf SMDPT stützt, kann beispielsweise einen oder mehrere SMDPT, also eine Anzahl von SMDPT, und keine, eine oder mehrere Induktivitäten aufweisen, die keine SMDPT sind. Somit ist ganz allgemein auch eine Kombination mit Induktivitäten möglich, welche andersartig ausgebildet sind.

Da die Flussverkettung eines SMDPT, wie bei anderen Transformatoren auch, bidirektional ist, kommen grundsätzlich beide Induktivitäten, aus denen sich ein SMDPT zusammensetzt, als Primär- und als Sekundärinduktivität in Betracht.

Da der Fluss eines SMDPT in Teilen sowohl oberhalb als auch unterhalb des Schaltungsträgers verläuft, kommen allgemein beide Seiten für die Beeinflussung der Flussverkettung durch leitfähige oder ferromagnetische Körper oder auch durch andere Körper in Frage.

Ein induktives System, das sich auf SMDPT stützt, kann die Primär- und/oder Sekundärinduktivitäten von SMDPT zu Reihen- und/oder Parallelschaltungen verbinden. So können beispielsweise die querenden Leiterbahnen unter mehreren SMD-Induktivitäten besonders vorteilhaft eine einzige Wicklung ausbilden. Ebenfalls vorteilhaft ist es, mehrere SMD-Induktivitäten als Primärinduktivitäten in Reihe zu schalten.

Es versteht sich, dass der Schaltungsträger auch dazu genutzt werden kann, die Messschaltung mit dem induktiven System zu integrieren. Beispielweise kann auf diese Weise die oben erwähnte elektronische Steuerungseinheit auf dem Schaltungsträger integriert sein.

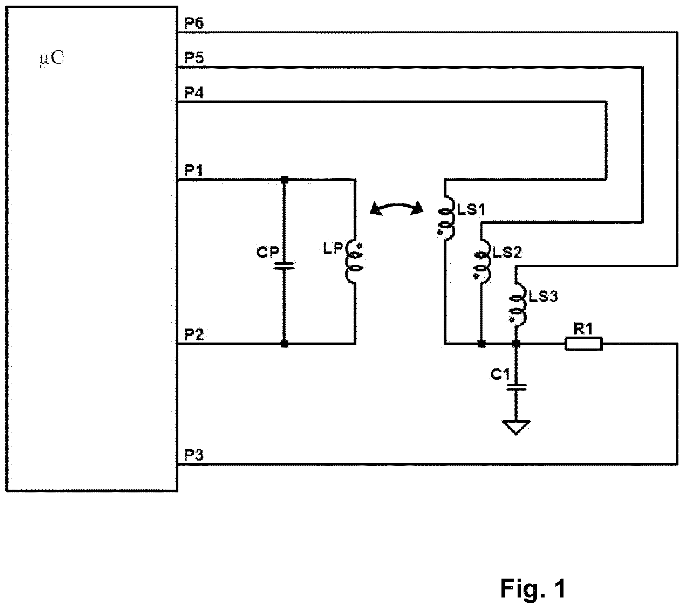

Ein Sensorsystem, das sich auf SMDPT stützt, weist typischerweise ein induktives System mit mindestens einem SMDPT und eine Messschaltung auf, welche in der Lage ist, einen Wechselstrom durch mindestens eine Induktivität zu schicken und an mindestens einer elektrisch oder magnetisch gekoppelten Induktivität mindestens einen elektrischen Parameter zu messen, wie zum Beispiel Real- oder Imaginärteil der Impedanz. Eine besonders bevorzugte Messschaltung für ein solches Sensorsystem ist weiter unten mit Bezug auf Fig. 1 beschrieben.

Weitere Merkmale und Vorteile wird der Fachmann dem nachfolgend mit Bezug auf die beigefügte Zeichnung beschriebenen Ausführungsbeispiel entnehmen. Dabei zeigen:
- Fig. 1:: eine Messschaltung,
- Fig. 2:: einen SMD-Planartransformator,
- Fig. 3:: einen Sensor,
- Fig. 4:: einen Messkörper in einem verformbaren Objekt.

Fig. 1 zeigt ein Ausführungsbeispiel einer Messschaltung, welche vorteilhaft mit dem erfindungsgemäßen Sensor verwendet werden kann. Dabei ist eine elektronische Steuerungseinheit in Form eines Mikrocontrollers µC vorgesehen. Dieser weist insgesamt sechs Ports auf, welche mit P1, P2, P3, P4, P5 und P6 bezeichnet sind.

An den Ports P1 und P2 ist ein Parallelschwingkreis angeschlossen, welcher vorliegend aus einer Referenzinduktivität LP und einem dazu parallel geschalteten Kondensator CP besteht.

Am Port P3 ist ein Widerstand R1 angeschlossen, an welchem wiederum ein Glättungskondensator C1 angeschlossen ist. Der Glättungskondensator C1 ist gegenüberliegend mit Masse verbunden.

Auf diese Weise kann an den Pol des Widerstands R1, welcher dem Port P3 gegenüberliegt, eine definierte Spannung eingestellt werden, und zwar insbesondere durch geeignete Pulsweitenmodulation am Port P3. Mit diesem Pol sind drei Messinduktivitäten LS1, LS2, LS3 verbunden, welche mit den Ports P4, P5 und P6 direkt elektrisch verbunden sind. Die Messinduktivitäten LS1, LS2, LS3 sind mit der Referenzinduktivität LP magnetisch gekoppelt. Wenn diese Kopplung durch einen nicht dargestellten Messkörper beeinflusst wird, so können Position und/oder Lage des Messkörpers durch Auswertung von entsprechenden Signalen der Messinduktivitäten LS1, LS2, LS3 ermittelt werden.

Bei der Referenzinduktivität LP kann es sich insbesondere um die weiter unten beschriebene Leiterplatteninduktivität handeln. Bei den Messinduktivitäten LS1, LS2, LS3 kann es sich insbesondere um die weiter unten beschriebenen Aufsatzinduktivitäten handeln.

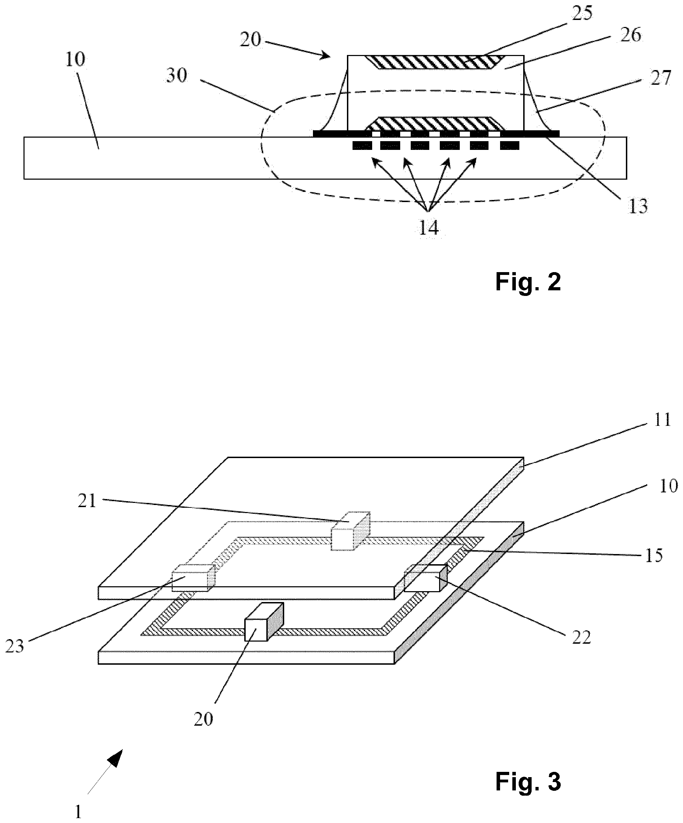

Fig. 2 zeigt eine Elementaranordnung eines SMD-Planartransformators (SMDPT), welche in vielfältigen Kombinationen induktive Systeme ausbilden kann. Dabei ist auf einem im Schnitt gezeigten Schaltungsträger 10 eine SMD-Induktivität bzw. Aufsatzinduktivität 20 bestückt. Diese weist einen Kern 26 auf, welcher von einer Wicklung 25 umschlossen ist. Anschlüsse, welche nicht separat gezeigt sind, sind mit Lötzinn 27 zu entsprechenden Pads 13 auf dem Schaltungsträger 10 verbunden.

Unter der Aufsatzinduktivität 20 queren in zwei Lagen Leiterbahnen 14 die Aufsatzinduktivität 20. Bei diesen Leiterbahnen 14 handelt es sich um Bestandteile einer Leiterplatteninduktivität. Diese ist wie gezeigt in zwei Ebenen ausgeführt, wobei in der oberen Ebene vier Leiterbahnen 14 zwischen die Pads 13 passen, und in der unteren Ebene sechs Leiterbahnen 14 untergebracht sind, da sich dort keine Pads mehr befinden. Alle Leiterbahnen 14 tragen zur Flussverkettung bei, auch wenn die Verkettung am Rand etwas geringer sein mag.

Die Flussverkettung selbst ist durch eine repräsentative Feldlinie 30 dargestellt. Es sei jedoch verstanden, dass das Feld des SMD-Planartransformators auch Feldlinien außerhalb und innerhalb dieses repräsentativen Verlaufs aufweist.

Ein Sensor bzw. ein induktives System ist vorzugsweise aus mehreren Anordnungen wie in Fig. 2 gezeigt zusammengesetzt. So können zum Beispiel senkrecht zur Papierebene von Fig. 2 mehrere Aufsatzinduktivitäten in einer Reihe angeordnet sein, um eine Veränderung einer Messgröße zu ermitteln, die entlang dieser Richtung erwartet wird. Um für diese Induktivitäten sämtlich eine Flussverkettung zu den Leiterbahnen 14 der Leiterplatteninduktivität zu bewirken, sollen die Leiterbahnen 14 vorteilhaft lediglich senkrecht zur Papierebene unter allen Aufsatzinduktivitäten 20 gerade verlängert werden. Dies stellt den einfachsten Fall dar, wie eine planare Induktivität mit vielen Aufsatzinduktivitäten verkettet sein kann. Bei anderen Anordnungen werden die Leiterbahnen 14 beispielsweise entsprechend einer anwendungsgemäßen Verteilung von Aufsatzinduktivitäten geführt sein, wobei sie beispielsweise gewunden sein können.

Fig. 3 zeigt einen Sensor 1 gemäß einem Ausführungsbeispiel der Erfindung. Ein solcher Sensor 1 ist für kleine Positionsänderungen oder als Kraftsensor vorteilhaft anwendbar, wobei die oben beschriebenen Vorgehensweisen angewendet werden können, um besonders vorteilhaft einen Sensor zu realisieren, der die jeweilige Messgröße in mehreren räumlichen Dimensionen erfassen kann. Dazu dient der nachfolgend beschriebene und in Fig. 3 dargestellte Aufbau.

Auf einem Schaltungsträger 10, welcher vorliegend eine Leiterplatte ist, befinden sich insgesamt vier Aufsatzinduktivitäten, nämlich eine erste Aufsatzinduktivität 20, eine zweite Aufsatzinduktivität 21, eine dritte Aufsatzinduktivität 22 und eine vierte Aufsatzinduktivität 23, welche eine Leiterplatteninduktivität 15 queren. Die Leiterplatteninduktivität 15 ist Teil des Schaltungsträgers 10. Jeder Kreuzungspunkt zwischen der Leiterplatteninduktivität 15 und den Aufsatzinduktivitäten 20, 21, 22, 23 ist so ausgeführt wie in Fig. 2, wobei lediglich die Details des Aufbaus in Fig. 3 nicht in gleicher Detailliertheit dargestellt sind. Dadurch befindet sich an den Positionen der Aufsatzinduktivitäten 20, 21, 22, 23 jeweils ein SMD-Planartransformator. Über dem Schaltungsträger 10, darunter oder auf beiden Seiten befindet sich ein leitfähiger oder ferromagnetischer Körper 11 zur Beeinflussung der Flussverkettung in jedem SMD-Planartransformator. Bei diesem Körper 11 handelt es sich vorliegend somit um einen Messkörper 11.

Die Bewegung des Messkörpers 11 kann nun durch das induktive System in mehreren Dimensionen erfasst werden, wenn es mit einer Messschaltung verbunden wird. Hierzu kann vorzugsweise auf die Schaltung zurückgegriffen werden, welche in Fig. 1 dargestellt ist und weiter oben beschrieben wurde. Eine vorteilhafte beispielhafte Möglichkeit der Beschaltung besteht darin, die Leiterplatteninduktivität 15 als Referenzinduktivität LP zu verwenden und jede der Aufsatzinduktivitäten 20, 21, 22, 23 als eine Messinduktivität LS zu verwenden. Dazu ist vorteilhaft die in Fig. 1 gezeigte Schaltung um einen weiteren Kanal zur Messung einer weiteren Messinduktivität zu erweitern. Die Möglichkeit, dies auf einfache Weise und mit geringem Aufwand durchzuführen, stellt eine wichtige Stärke dieser Schaltung dar.

Die Aufsatzinduktivitäten 20, 21, 22, 23 sind in SMD-Technik auf dem Schaltungsträger 10 aufgebracht.

Eine Messung der Bewegung des Messkörpers 11 erfolgt in der Richtung senkrecht zum Schaltungsträger 10 dadurch, dass sich der Messkörper 11 allen Aufsatzinduktivitäten 20, 21, 22, 23 annähert bzw. sich von ihnen entfernt, wodurch eine gleichmäßige Beeinflussung der Flussverkettung in allen vier SMD-Planartransformatoren erfolgt. In den beiden Dimensionen längs des Schaltungsträgers 10 befinden sich die Kanten des Messkörpers 11 im Nahbereich der SMD-Planartransformatoren. Dadurch bewirkt eine Verschiebung des Messkörpers 11, dass sich mehr oder weniger vom Messkörper 11 im unmittelbaren magnetischen Wirkungsbereich des jeweiligen SMD-Planartransformators befindet. Die Beeinflussung der Flussverkettung an den Aufsatzinduktivitäten 20, 21, 22, 23 erfolgt daher paarweise differenziell. Aufgrund der linearen Unabhängigkeit der Beeinflussung der Flussverkettung durch Bewegungen des Messkörpers 11 in den verschiedenen Dimensionen ist es möglich, die Dimensionen nach Messung der Flussverkettung an den vier SMD-Planartransformatoren separat rechnerisch zu ermitteln.

Die Anordnung von Fig. 3 ist grundsätzlich empfindlich auf Bewegungen des Körpers 11 in fünf Dimensionen, weil auch Drehungen des Körpers 11 um Achsen, die in der Ebene des Schaltungsträgers 10 liegen, zu einer differenziellen Änderung der Flussverkettung führen. Daher kann die Anordnung auch zur Messung solcher Drehungen verwendet werden. Es können jedoch auch weniger Dimensionen, beispielsweise drei Dimensionen, gemessen werden.

Bei der Anwendung solcher Ausführungen wird vorteilhaft darauf geachtet, dass gegebenenfalls nicht unterscheidbare Dimensionen nicht gemeinsam auftreten oder dass es keine Rolle spielt, wenn die entsprechenden Drehungen und linearen Bewegungen sich im Ergebnis überlagern. Alternativ kann die Anordnung um weitere SMD-Planartransformatoren ergänzt werden, welche eine weitere Unterscheidung erlauben.

Es sei verstanden, dass der Messkörper 11 nicht die in Fig. 3 dargestellte Form haben muss. Da es typischerweise nur auf die Bestandteile des Messkörpers 11 ankommt, die sich in unmittelbarer Nähe des SMD-Planartransformators befinden, kann der Messkörper 11 ebenso gut rund oder kreuzförmig oder von einer anderen Form sein. Der Messkörper 11 kann beispielsweise auch in vier oder eine andere Anzahl von Einzelteilen zerlegt werden, also mehrteilig ausgeführt sein, wobei sich diese Einzelteile vorteilhaft in unmittelbarer Nähe der SMD-Planartransformatoren befinden und mit Konstruktionselementen verbunden werden können, deren magnetische Eigenschaften unbedeutend für die Funktion sind. Auch eine andere beliebige Anzahl von Teilen des Messkörpers 11, beispielsweise drei, zwei, fünf oder sechs Teile, kann verwendet werden.

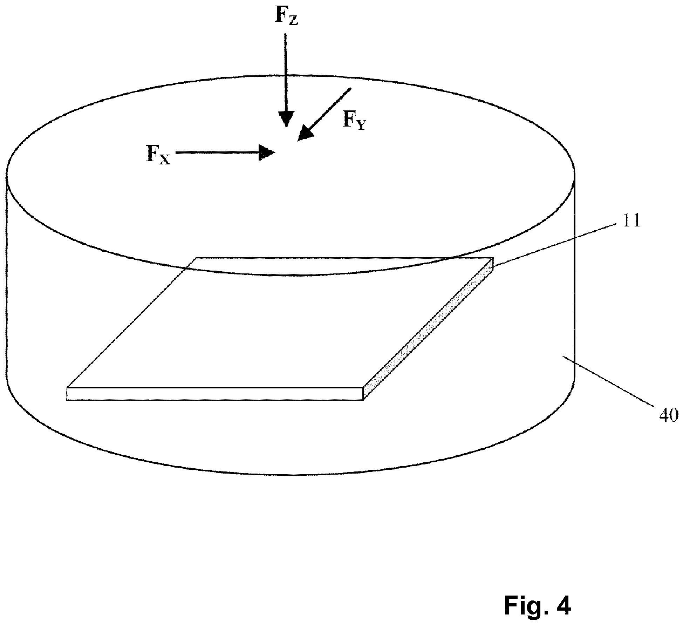

In Fig. 4 ist eine Anordnung des Messkörpers 3 in einem elastisch verformbaren Objekt 40 dargestellt, was insbesondere für eine Anwendung als dreidimensionaler Kraftsensor vorteilhaft ist. Der Messkörper 11 ist für diese Anwendung in das elastisch verformbare Objekt 40 eingebettet, das beispielsweise die Form eines Zylinders haben kann. Es kann jedoch auch andere Formen wie beispielsweise diejenigen eines Kegels, eines Kegelstumpfs oder einer Kugel haben. Eine Fläche des elastisch verformbaren Objekts 40 ist so ausgebildet, dass sie mit dem hier nicht dargestellten Schaltungsträger 10 und seinen Anbauten verbunden werden kann. Der Schaltungsträger 10 und der Messkörper 11 sind dabei vorteilhaft so zueinander positioniert wie oben beschrieben. Werden nun an der Oberseite des elastisch verformbaren Objekts 40 Kräfte eingeleitet, wie dies in Fig. 4 durch die Kraftpfeile Fx, Fy, Fz dargestellt ist, so lassen sich die durch die Kraftwirkung verursachten elastischen Verformungen messen, wie dies weiter oben beschrieben wurde.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Sensor (1), aufweisend
- einen Schaltungsträger (10),
- eine Anzahl von Aufsatzinduktivitäten (20, 21, 22, 23), und
- zumindest eine Leiterplatteninduktivität (15), welche mit den Aufsatzinduktivitäten (20, 21, 22, 23) gekoppelt ist,
- wobei die Aufsatzinduktivitäten (20, 21, 22, 23) in SMD-Technik auf dem Schaltungsträger (10) aufgebracht sind.
- wobei die Leiterplatteninduktivität (15) unterhalb der Aufsatzinduktivitäten (20, 21, 22, 23) in dem Schaltungsträger (10) ausgeführt ist,
- wobei die Leiterplatteninduktivität (15) eine Referenzinduktivität (LP) ist und die Aufsatzinduktivitäten (20, 21, 22, 23) jeweilige Messinduktivitäten (LS) sind; oder
- wobei zumindest eine der Aufsatzinduktivitäten (20, 21, 22, 23) eine Referenzinduktivität (LP) ist und die Leiterplatteninduktivität (15) eine Messinduktivität (LS) ist
- aufweisend eine Kapazität (CP), welche mit der Referenzinduktivität (LP) zu einem Parallelschwingkreis verschaltet ist, und
- eine elektronische Steuerungseinheit (µC),
- wobei die elektronische Steuerungseinheit (µC) direkt mit dem Parallelschwingkreis verbunden ist und dazu konfiguriert ist, den Parallelschwingkreis mit einer Anregungsfrequenz oszillierend anzuregen, welche aus einem Takt der elektronischen Steuerungseinheit abgeleitet ist, und
- wobei die elektronische Steuerungseinheit (µC) direkt mit jeder der Messinduktivitäten (LS) verbunden ist und dazu konfiguriert ist, einen Wert, welcher zumindest eine Messgröße anzeigt, an der jeweiligen Messinduktivität (LS) zu messen.

2. Sensor (1) nach einem der vorhergehenden Ansprüche,
- wobei die Leiterplatteninduktivität (15) in Form einer Anzahl von Leiterbahnen (14) in dem Schaltungsträger (10) ausgeführt ist.

3. Sensor (1) nach einem der vorhergehenden Ansprüche,
- welcher eine Mehrzahl von Aufsatzinduktivitäten (20, 21, 22, 23) aufweist, welche elektrisch in Reihe geschaltet sind.

4. Sensor (1) nach einem der Ansprüche 1 und 2,
- welcher eine Mehrzahl von Aufsatzinduktivitäten (20, 21, 22, 23) aufweist, welche jeweils einzeln mit einer elektronischen Steuerungseinheit verbunden sind.

5. Sensor (1) nach einem der vorhergehenden Ansprüche,
- welcher ferner einen Messkörper (11) aufweist, welcher relativ zum Schaltungsträger (10) beweglich ist.

6. Sensor (1) nach Anspruch 5,
- wobei der Messkörper (11) hinsichtlich Position und/oder Lage relativ zum Schaltungsträger (10) beweglich ist; und/oder
- wobei der Messkörper (11) ferromagnetisch ist und/oder elektrisch leitfähig ist.

7. Sensor (1) nach einem der Ansprüche 5 oder 6,
- wobei der Messkörper (11) flächig und/oder mehrteilig ausgeführt ist;
und/oder
- wobei der Messkörper (11) in einem elastisch verformbaren Objekt (40) eingebettet ist.

8. Sensor (1) nach einem der vorhergehenden Ansprüche,
- welcher als Positions- und/oder Kraftsensor ausgeführt ist.

9. Sensor (1) nach einem der vorhergehenden Ansprüche,
- wobei die Aufsatzinduktivitäten (20, 21, 22, 23) entlang eines Pfads oder eines Umfangs angeordnet sind.

10. Sensor (1) nach einem der vorhergehenden Ansprüche,
- wobei zumindest einige der Messinduktivitäten (LS) seriell und/oder parallel elektrisch verschaltet sind.

11. Sensor (1) nach Anspruch 10,
- wobei die Referenzinduktivität (LP) bei durchfließendem Strom ein Magnetfeld erzeugt, welches die Messinduktivitäten (LS) durchdringt und welches vorzugsweise von dem Messkörper (11) abhängig von der Position und/oder der Lage des Messkörpers (11) verändert wird.

## Claims

1. Sensor (1), having
- a circuit carrier (10),
- a number of attachment inductances (20, 21, 22, 23), and
- at least one printed circuit board inductance (15), which is coupled to the attachment inductances (20, 21, 22, 23),
- wherein the attachment inductances (20, 21, 22, 23) are applied to the circuit carrier (10) using SMD technology
- wherein the printed circuit board inductance (15) is implemented underneath the attachment inductances (20, 21, 22, 23) in the circuit carrier (10),
- wherein the printed circuit board inductance (15) is a reference inductance (LP) and the attachment inductances (20, 21, 22, 23) are respective measurement inductances (LS); or
- wherein at least one of the attachment inductances (20, 21, 22, 23) is a reference inductance (LP) and the printed circuit board inductance (15) is a measurement inductance (LS),
having
- a capacitance (CP), which is interconnected with the reference inductance (LP) to form a parallel resonant circuit, and
- an electronic control unit (µC),
- wherein the electronic control unit (µC) is connected directly to the parallel resonant circuit and is configured to excite the parallel resonant circuit into oscillation at an excitation frequency that is derived from a clock of the electronic control unit, and
- wherein the electronic control unit (µC) is connected directly to each of the measurement inductances (LS) and is configured to measure a value, which indicates at least one measurement variable, at the respective measurement inductance (LS) .

2. Sensor (1) according to one of the preceding claims,
- wherein the printed circuit board inductance (15) is implemented in the form of a number of conductor tracks (14) in the circuit carrier (10).

3. Sensor (1) according to either of the preceding claims,
- which has a plurality of attachment inductances (20, 21, 22, 23), which are electrically connected in series.

4. Sensor (1) according to either of Claims 1 and 2,
- which has a plurality of attachment inductances (20, 21, 22, 23), which are each individually connected to an electronic control unit.

5. Sensor (1) according to one of the preceding claims,
- which also has a measurement body (11), which can be moved relative to the circuit carrier (10).

6. Sensor (1) according to Claim 5,
- wherein the measurement body (11) can be moved with respect to position and/or location relative to the circuit carrier (10);
and/or
- wherein the measurement body (11) is ferromagnetic and/or electrically conductive.

7. Sensor (1) according to either of Claims 5 and 6,
- wherein the measurement body (11) is embodied in a planar and/or multipart manner;
and/or
- wherein the measurement body (11) is embedded in an elastically deformable object (40).

8. Sensor (1) according to one of the preceding claims,
- which is embodied as a position and/or force sensor.

9. Sensor (1) according to one of the preceding claims,
- wherein the attachment inductances (20, 21, 22, 23) are arranged along a path or a circumference.

10. Sensor (1) according to one of the preceding claims,
- wherein at least some of the measurement inductances (LS) are electrically interconnected in series and/or in parallel.

11. Sensor (1) according to Claim 10,
- wherein the reference inductance (LP) generates a magnetic field when current flows through, said magnetic field penetrating the measurement inductances (LS) and preferably being changed by the measurement body (11) depending on the position and/or the location of the measurement body (11).

## Revendications

1. Capteur (1), comportant
- un support de circuit (10),
- un certain nombre d'inductances rapportées (20, 21, 22, 23), et
- au moins une inductance de carte de circuit imprimé (15) qui est couplée aux inductances rapportées (20, 21, 22, 23),
- les inductances rapportées (20, 21, 22, 23) étant montées sur le support de circuit (10) par une technique SMD,
- l'inductance de carte de circuit imprimé (15) étant réalisée dans le support de circuit (10) au-dessous des inductances rapportées (20, 21, 22, 23),
- l'inductance de circuit imprimé (15) étant une inductance de référence (LP) et les inductances rapportées (20, 21, 22, 23) étant des inductances de mesure respectives (LS) ; ou
- l'une au moins des inductances rapportées (20, 21, 22, 23) étant une inductance de référence (LP) et l'inductance de carte de circuit imprimé (15) étant une inductance de mesure (LS),
- comportant
une capacité (CP) qui est reliée à l'inductance de référence (LP) pour former un circuit résonnant parallèle, et
une unité de commande électronique (µC),
- l'unité de commande électronique (µC) étant reliée directement au circuit résonnant parallèle et étant conçue pour exciter de manière oscillante le circuit résonnant parallèle à une fréquence d'excitation qui est dérivée d'un cycle de l'unité de commande électronique, et
- l'unité de commande électronique (µC) étant reliée directement à chacune des inductances de mesure (LS) et étant conçue pour mesurer une valeur, qui indique au moins une grandeur mesurée, au niveau de l'inductance de mesure respective (LS).

2. Capteur (1) selon l'une des revendications précédentes,
- l'inductance de carte de circuit imprimé (15) étant conçue sous la forme d'un certain nombre de pistes conductrices (14) dans le support de circuit (10).

3. Capteur (1) selon l'une des revendications précédentes,
- qui comporte une pluralité d'inductances rapportées (20, 21, 22, 23) montées électriquement en série.

4. Capteur (1) selon l'une des revendications 1 et 2,
- qui comporte une pluralité d'inductances rapportées (20, 21, 22, 23) qui sont chacune reliées individuellement à une unité de commande électronique.

5. Capteur (1) selon l'une des revendications précédentes,
- qui comprend en outre un corps de mesure (11) qui est mobile par rapport au support de circuit (10).

6. Capteur (1) selon la revendication 5,
- le corps de mesure (11) étant mobile en termes de position et/ou d'emplacement par rapport au support de circuit (10) ; et/ou
- le corps de mesure (11) étant ferromagnétique et/ou électriquement conducteur.

7. Capteur (1) selon l'une des revendications 5 et 6,
- le corps de mesure (11) étant sensiblement bidimensionnel et/ou étant réalisé en plusieurs parties ;
et/ou
- le corps de mesure (11) étant incorporé dans un objet (40) élastiquement déformable.

8. Capteur (1) selon l'une des revendications précédentes,
- qui est réalisé sous la forme d'un capteur de position et/ou de force.

9. Capteur (1) selon l'une des revendications précédentes,
- les inductances rapportées (20, 21, 22, 23) étant disposées le long d'un chemin ou d'une circonférence.

10. Capteur (1) selon l'une des revendications précédentes,
- au moins certaines des inductances de mesure (LS) étant montées électriquement en série et/ou en parallèle.

11. Capteur (1) selon la revendication 10,
- l'inductance de référence (LP) générant, lorsque le courant circule, un champ magnétique qui pénètre dans les inductances de mesure (LS) et qui est de préférence modifié par le corps de mesure (11) en fonction de la position et/ou de l'emplacement du corps de mesure (11).
